# EUROPEAN PATENT SPECIFICATION

(11) **EP 2 594 497 B1**
(45) Date of publication and mention of the grant of the patent: **11.06.2014**
(21) Application number: 12189519.7
(22) Date of filing: 23.10.2012
(51) Int. Cl.: B65C 7/00, B65G 47/71, B65G 47/64, B65G 21/20, B65G 15/20, B65G 15/14

(54) **System for inserting sleeves**
Vorrichtung zum Aufsetzen von Manschetten
Dispositif pour insérer des manchons

(30) Priority: 18.11.2011 IT BO20110656
(43) Date of publication of application: 22.05.2013
(73) Proprietor: Cosmopack S.r.l., 41100 Modena (IT)
(72) Inventor: Campagnoli, Roberto, 40134 Bologna (IT); Lacinio, Salvatore, 40050 Montesanpietro (Bologna) (IT)
(74) Representative: Gustorf, Gerhard

(56) References cited:
- FR-A1- 2 598 400
- FR-A1- 2 937 626
- US-A- 2 867 956

## Description

### Field of the invention

- The present invention concerns a system for inserting sleeves according to the preamble of claim 1 and as known from FR 2 937 626.
- More in particular, the present invention concerns a system for inserting sleeves around the neck of bottles by an automatic machine and with continuous motion.

### Background of the Invention

- At the present time, to execute the operations for inserting sleeves around the neck of bottles human operators are used, in which said operators manually execute these operations.

### Summary of the invention

- The object of the present invention is therefore to overcome the aforesaid drawbacks.
- The invention, which is characterized by the claims, resolves the problem of creating a system for inserting sleeves around the neck of bottles.

### Brief Description of the Figures

- Further characteristics and advantages of the present invention will be made clearer by the following description of a preferred embodiment, provided here purely by way of example and without restrictive intent, with reference to the figures of the attached drawings in which:
   - Figures 1 and 2 show, schematically, the system of the present invention, and they are respectively a side view and a top view;
   - Figure 3 and 3A show a shape of a preferred sleeve and, respectively, in a folded configuration and in an open configuration.

### Description by way of example of the System

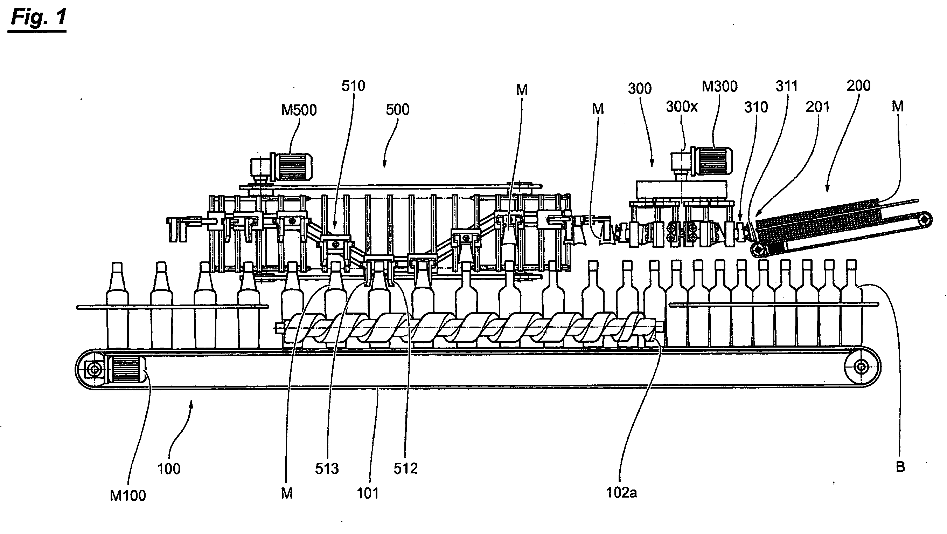

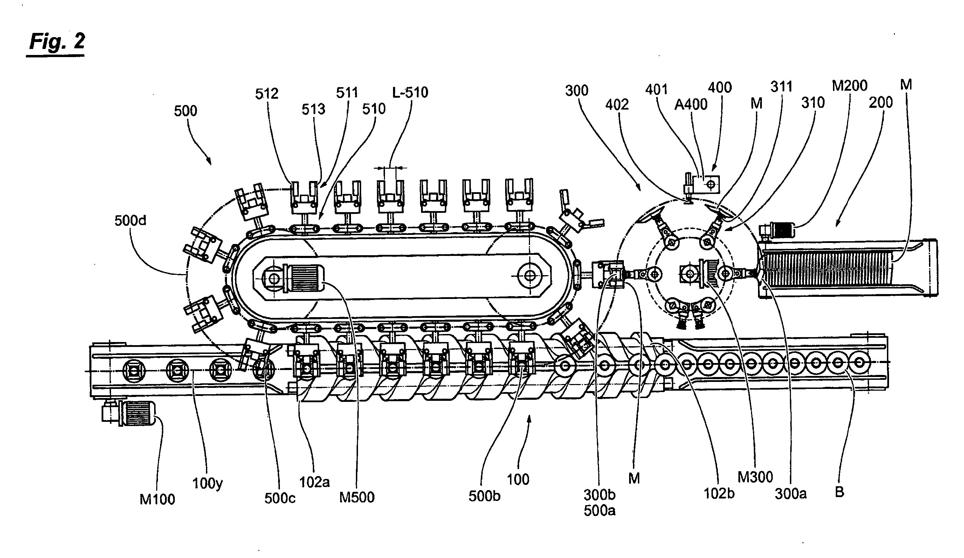

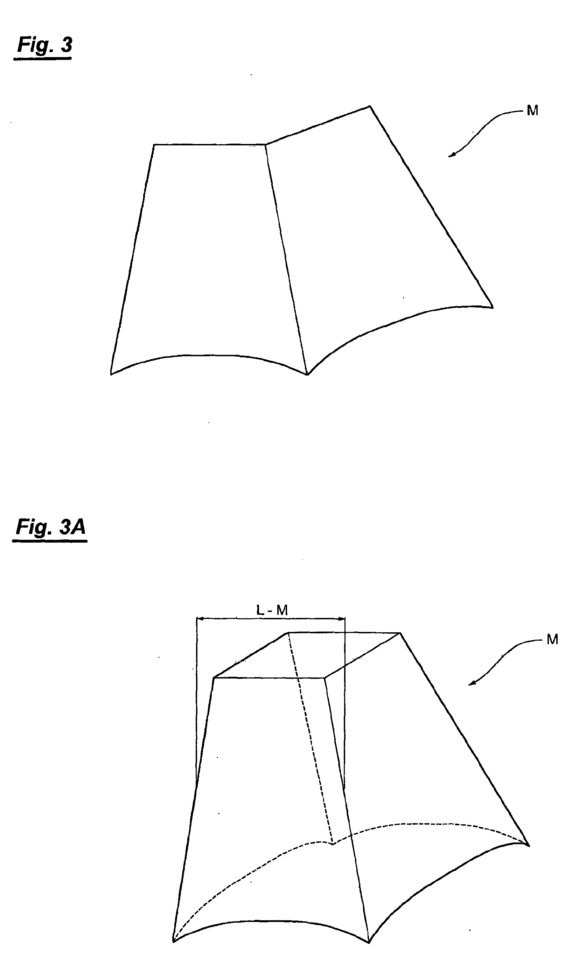

- With reference to the figures 1, 2 and 3, the system to insert sleeves **M** around the neck of bottles **B** comprises: >-transport means **100,** >-store means **200;** >-grasping-translating-feeding means **300,** >-opening means **400,** and >-grasping-transporting-inserting **means 500.**
- With reference to the transport means **100,** they extend rectilinearly and are able to advance and to transport bottles **B** along a rectilinear bottle advancement path **100y,** from upstream towards downstream, with continuous motion, one behind the other, in vertical order, with the neck upwardly oriented.
- In the form illustrated here by way of example, said transport means **100** comprise a conveyor belt **101** able to configure a transport plane and a couple of cochleas in which said cochleas are able to control and to manage the flow in advancement of the bottles **B.**
- With reference to the store means **200,** they are able to contain the sleeves **M** one behind the other, in a folded flat configuration, and they are able to feed said sleeves **M** in said folded flatted configuration towards a take-up zone **201.**
- With reference to the grasping-translating-feeding means **300,** they are able to grasp in a single succession the sleeves **M** in proximity of the take-up zone **201,** are able to transport the same sleeves **M** one behind the other along a first path **300a_300b** of grasping-opening-feeding sleeves, and are able to feed the partially opened sleeves towards the following grasping-transporting-inserting means **500.**
- In the embodiment illustrated here by way of example, said grasping-translating-feeding means **300** comprise a rotating system having vertical axis **300x,** in which said rotating system comprises a plurality of grasping devices **310,** positioned at equal circumferential intervals, in which each grasping device **310** comprises vacuum means **311,** in which said vacuum means are transported to orbit in a closed loop path laying in a horizontal plane.
- With reference to the opening means **400,** they are able to intercept and to partially open the sleeves **M** during their transport along said first path **300a_300b** of grasping-opening-feeding sleeves.
- With reference to the grasping-transporting-inserting means **500,** they are able to grasp the partialy open sleeves fed/introduced by said grasping-translating-feeding means **300,** as well as to transport the sleeves in a positive manner, one behind the other, along a second path **500a_500b_500c_500d** of grasping-opening-insertion-release of said sleeves.
- Along said second path **500a_500b_500c_500d** of grasping-opening-insertion-release, the sleeves **M,** in a constant positive grasping, are inserted around the neck of the respective bottles **B,** while said bottles **B** are advancing along the rectilinear path **100y** of bottles advancement, in which said rectilinear path **100y** is configured by said transport means **100.**
- With reference to the first operative path **300a_300b** of grasping-opening-feeding of the sleeves, it is configured as a circular segment, in which the sleeve opening means **400** are radially positioned near said first path **300a_300b,** in which said opening means **400** act on the sleeves **M** during their transport along said first path **300a_300b** of grasping-opening-feeding sleeves.
- With reference to the second operative path **500a_500b_500c_500d** of grasping-opening-insertion-release of the sleeves, substantially said path comprises a first operative segment **500a_500b,** a second operative segment **500b_500c,** a third operative segment **500c_500d,** and a non-operative segment **500d_500a.**
- With reference to the first operative segment **500a_500b,** along said first operative segment a first operation is performed, in which by this first operation the sleeves **M,** are fed in single succession by said grasping-translating-feeding means **300,** in a partially opened configuration, and then, in this single succession, said sleeves are grasped in a positive manner and, after this first operation, while maintaining the positive grasping of the sleeves **M,** a second operation ifs performed, in which by this second operation the same sleeves **M** are completely and correctly opened.
- With reference to the second segment **500b_500c,** along said second operative segment a first operation is performed, in which by this first operation, while maintaining the positive grasping of the sleeves **M,** said sleeves **M** are moved from upstream towards downstream in an open configuration, planning and maintaining for each sleeve **M** a vertical alignment with respect to an underlying bottle **B,** while said bottles **B** are translated along the rectilinear path of bottle advancement **100y** defined by the transport means **100,** as well as a second operation is performed, in which by this second operation, while maintaining the positive grasping of the sleeves **M,** said sleeves **M** are moved from upstream towards downstream, in a open configuration, with the purpose to insert in succession the sleeves **M** around the necks of the respective vertically aligned underlying bottles **B.**
- With reference to said third segment **500c_500d,** along said third segment an operation is performed, in which by this operation, after the insertion of the sleeves **M,** the positive grasping of the sleeves **M** is abandoned.
- In the form illustrated here by way of example, the grasping-transporting-inserting means **500** comprise a plurality of grasping devices **510** conducted to move in a closed path orbit, in which each grasping-device **510** comprises a respective gripper **511,** in which each gripper **511** comprises two gripping jaws **512** and **513a,**
- With the purpose to a execute a correct opening of the sleeves **M,** when said gripper **511** is in its closed position, the two jaws **512** and **513** are spaced among them with a determined dimension **L-510,** in which said space dimension **L-510** corresponds, substantially, to the dimension **L-M** of the sleeve **M** in its configuration of correct and complete opening.
- The grasping devices **510** are conducted to move in a closed path orbit, in which said path comprises a first segment **500a_500b,** along which said grasping devices **510** grasp the partially opened sleeves **M,** in single succession, in which said sleeves **M** are fed in single succession by said grasping-translating-feeding means **300** and a second segment **500b_500c,** along which said grasping devices **510** move from upstream towards downstream, maintaining the positive grasping of the sleeves **M** in their open configuration while maintaining for each sleeve **M** a vertical alignment with respect to a respective underlying bottle **B,** in which while said grasping device **510** are moving from upstream towards downstream along said second segment **500b_500c** the following operations are executed in succession: **a)**-moving said grasping devices **510** from upwards to downwards with the purpose to insert in a positive manner the sleeves **M** around the necks of the bottles **B, b)**-opening the respective jaws of grasping, **512-513,** in order to abandon/release the grasping of the inserted sleeve **M, c)**-moving said grasping devices **510** from downwards to upwards up to a level in which said grasping devices **510** do not interfere with the advancing bottles **B.**
- With reference to the figures, the system, preferably, comprises: _>-a first servo motor **M100,** connected to and controlled by a control unit, for driving said transport means **100;** _>-a second servo motor **M200,** connected to and controlled by a control unit, for driving said store means **200;** _>-a third servo motor **M300,** connected to and controlled by a control unit, for driving said grasping-translating-feeding means **300;** _-a fourth servo motor **M500,** connected to and controlled by a control unit, for driving grasping-transporting-inserting means **500.**

The above description of the system object of the present invention is provided solely by way of non-limiting example, and clearly, therefore, said system can be modified or varied in any way suggested by experience and/or its use or application within the scope of the following claims, in which said claims are also an integral part of the above description.

## Claims

1. System for inserting sleeves **(M)** around the neck of bottles **(B), comprising** bottle transport means **(100),** which extend rectilinearly and advance and transport bottles **(B)** along a rectilinear bottle advancement path **(100y),** from upstream towards downstream, with continuous motion, one behind the other, in vertical order, with the neck upwardly oriented; **characterized by fact that** it comprises: >-sleeve store means **(200)** comprising a sleeve take-up zone **(201)**, said store means **(200)** contain the stacked sleeves **(M),** one behind the other and in folded flat configuration, and feed said sleeves **(M)** in said folded flatted configuration towards said take-up zone **(201)**; >-grasping-translating-feeding means **(300), which** grasp the sleeves **(M)** in proximity of the take-up zone **(201) of** said store means **(200)** and transport the same sleeves **(M)** withdrawn in succession one behind the other along a first path **(300a_300b)** of grasping-opening-feeding sleeves, and downstream of said first path **(300a_300b),** said grasping-translating-feeding means **(300)** feed the partially open sleeves towards the following grasping-transporting-inserting means **(500);** >-opening means **(400),** which partially open the sleeves **(M)** during their transport along said first path **(300a_300b)** of grasping-opening-feeding sleeves; >-grasping-transporting-inserting means (500), which grasp the partially open sleeves introduced by said grasping-translating-feeding means **(300)** and transport the sleeves in a positive manner one behind the other along a second path **(500a_500b_500c_500d)** of grasping-opening-insertion-release sleeves, wherein along said second path **(500a_500b_500c_500d)** of grasping-opening-insertion-release sleeves the sleeves **(M)** are inserted around the neck of the respective bottles **(B)** while said bottles **(B)** are advancing along the rectilinear path **(100y)** of bottles advancement.

2. System according to claim 1, **characterized by the fact that** said first path **(300a_300b)** of grasping-opening-feeding sleeves is configured as a circular segment, **by the fact that** said sleeve opening means **(400)** are radially positioned near said first path **(300a_300b)** of grasping-opening-feeding sleeves configured as a circular segment, and **by the fact that** said opening means **(400)** act on the sleeves **(M)** during their transport along said first path **(300a_300b)** of grasping-opening-feeding sleeves.

3. System according to the claim 1 or 2, **characterized by the fact** that said second path **(500a_500b_500c_500d)** of grasping-opening-insertion-release sleeves comprises a first segment **(500a_500b)** along which following operations are performed:
>-the sleeves **(M),** partially opened, in single succession, are grasped in a positive manner, in which said sleeves (M) are fed in single succession by said grasping-translating-feeding means **(300);**
>-maintaining the positive grasping of the sleeves, the same sleeves are completely and correct opened.

4. System according to one of the claims from 1 to 3, **characterized by the fact that** said second path **(500a_500b_500c_500d)** of grasping-opening-insertion-release comprises a second segment **(500b_500c)** along which following operations are performed:
>-maintaining the positive grasping of the sleeves, said sleeves are moved from upstream towards downstream in an open configuration, planning and maintaining for each sleeve **(M)** a vertical alignment with respect to an underlying bottle **(B),** while said bottles **(B)** are translated along the rectilinear path of bottile advancement **(100y)** defined by the transport means **(100);**
>-maintaining the positive grasping of the sleeves, said sleeves are moved from upstream towards downstream in a open configuration, with the purpose to insert in succession the sleeves around the necks of the respective vertically aligned underlying bottles.

5. System according to one of the claims from 1 to 4, **characterized by the fact that** said second path **(500a_500b_500c_500d)** of grasping-opening-insertion-release comprises a third segment **(500c_500d)** along which following operations are performed: >-the positive grasping of the sleeves **(M)** inserted around the necks of the bottle **(B)** is abandoned.

6. System according to one of the preceding claims, **characterized by the fact that** said grasping-transporting-inserting means **(500)** comprise a plurality of grasping devices **(510)** conducted to move an closed path orbit, **in which** each grasping-device comprises a respective gripper **(510a),** in which each gripper **(511a)** comprises two gripping jaws **(512a, 513a), in which** said gripper has a closed position in which the two jaws are spaced **(L-510)** among them with a determined dimension with the purpose to define the format **(L-M)** of the sleeve **(M)** and in this manner defining the correct and complete opening of the same sleeve.

7. System according to claim 6, **characterized by the fact that** said grasping-transporting-inserting means **(500)** comprise a plurality of grasping devices **(510)** conducted to move in a closed path orbit, **by the fact that** said closed path orbit comprises a first segment **(500a_500b)** along which said grasping devices **(510)** grasp in single succession each single partially opened sleeve **(M)** in which said sleeves **(M)** are fed in single succession by said grasping-translating-feeding means **(300).**

8. System according to claim 7, **characterized by the fact that** said grasping-transporting-inserting means **(500)** comprise a plurality of grasping devices **(510)** conducted to move in a closed path orbit, **by the fact that** said closed path orbit comprises a second segment **(500ba_500c), by the fact that** along said second segment **(500ba_500c)** said grasping devices **(510)** move from upstream towards downstream maintaining the positive grasping of the sleeves **(M)** in their open configuration and maintaining for each sleeve **(M)** a vertical alignment with respect to a respective underlying bottle **(B),** and **by the fact that** said grasping devices **(510)** moving from upstream towards downstream along said second segment **(500b_500c)** perform in succession the following operations:
**a)-**move said grasping devices **(510)** from upwards to downwards with the purpose to insert in a positive manner the sleeves **(M)** around the necks of the bottles **(B),**
**b)-**open the respective jaws of grasping of said grasping devices **(510)** in order to release the grasping of the inserted sleeve **(M),**
**c)-**move said grasping devices **(510)** from downwards to upwards up to a level in which said grasping devices **(510)** do not interfere with the advancing bottles **(B).**

9. System according to one of the preceding claims, **characterized by the fact that** it comprises:
>-a first servo motor **(M100),** connected to and controlled by a control unit, for driving said transport means **(100);**
>-a second servo motor **(M200),** connected to and controlled by a control unit, for driving said store means **(200)**;
>-a third servo motor **(M300),** connected to and controlled by a control unit, for driving said grasping-translating-feeding means **(300)**;
>-a fourth servo motor **(M500),** connected to and controlled by a control unit, for driving grasping-transporting-inserting means **(500).**

## Patentansprüche

1. Vorrichtung zum Aufsetzen von Manschetten (M) auf den Hals von Flaschen (B), umfassend Flaschentransportmittel (100), die sich geradlinig erstrecken und die Flaschen (B) auf einer geradlinigen Flaschenvorschubbahn (100y) nacheinander und kontinuierlich in Förderrichtung von hinten nach vom transportieren, wobei die vertikal stehenden Flaschen mit dem Hals nach oben weisen, **gekennzeichnet durch**
- Manschettenmagaziniermittel (200) mit einer Manschettenentnahmezone (201), wobei die Magaziniermittel (200) die einzeln hintereinander geschichteten Manschetten (M) in flach gefalteter Form aufnehmen und diese in der flach gefalteten Form in Richtung auf die Entnahmezone (201) vorschieben,
- Greif-, Überführung- und Vorschubmittel (300), die die Manschetten (M) im Bereich der Entnahmezone (201) der Magaziniermittel (200) erfassen und die nacheinander entnommenen Manschetten (M) auf einer ersten Entnahme-, Öffnungs- und Zuführbahn (300a - 300b) nach vom transportieren, wobei die Greif-, Überführungs- und Vorschubmittel (300) die teilweise geöffneten Manschetten (M) in Richtung auf nachfolgende Greif-, Transport- und Aufsetzmittel (500) vorschieben,
- Öffnungsmittel (400), welche die Manschetten (M) bei ihrem Transport auf der ersten Entnahme-, Öffnungs- und Zuführbahn (300a - 300b) teilweise öffnen,
- Greif-, Transport- und Aufsetzmittel (500), welche die von den Greif-, Überführungs- und Vorschubmitteln (300) gelieferten, teilweise geöffneten Manschetten (M) nacheinander erfassen und formschlüssig einzeln nacheinander auf einer zweiten Bahn (500a - 500b - 500c - 500d) zum Ergreifen, Öffnen, Aufsetzen und Freigeben transportieren, wobei auf dieser Bahn die Manschetten (M) auf den Hals der entsprechenden Flaschen (B) aufgesetzt werden, während sich die Flaschen (B) auf der geradlinigen Flaschenvorschubbahn (100y) vorwärts bewegen.

2. Vorrichtung nach Anspruch 1, **dadurch gekennzeichnet, dass** die erste Entnahme-, Öffnungs- und Zuführbahn (300a - 300b) für die Manschetten als kreisförmiges Segment ausgebildet ist, dass die Öffnungsmittel (400) radial neben dieser als kreisförmiges Segment ausgebildeten Bahn (300a - 300b) angeordnet sind und dass die Öffnungsmittel (400) auf die Manschetten (M) während ihres Transportes entlang der ersten Bahn (300a - 300b) zur Entnahme, zum Öffnen und zum Zuführen einwirken.

3. Vorrichtung nach Anspruch 1 oder 2, **dadurch gekennzeichnet, dass** die zweite Bahn (500a - 500b - 500c - 500d) zum Ergreifen, Öffnen, Aufsetzen und Freigeben der Manschetten ein erstes Segment (500a - 500b) aufweisen, an dem die nachstehenden Operationen ausgeführt werden:
- die teilweise geöffneten Manschetten (M), die einzeln nacheinander von den Greif-, Überführungs- und Vorschubmitteln (300) zugeführt wurden, werden einzeln nacheinander formschlüssig erfasst,
- die Manschetten (M) werden unter Beibehaltung ihres formschlüssigen Erfassens vollständig und korrekt geöffnet.

4. Vorrichtung nach einem der Ansprüche 1 bis 3, **dadurch gekennzeichnet, dass** die zweite Bahn (500a - 500b - 500c - 500d) zum Ergreifen, Öffnen, Aufsetzen und Freigeben ein zweites Segment (500b - 500c) aufweisen, an dem die nachstehenden Operationen ausgeführt werden:
- unter Beibehaltung des formschlüssigen Erfassens werden die Manschetten in geöffneter Form vorwärts bewegt, wobei jede Manschette (M) relativ zu der darunter angeordneten Flasche (B) vertikal ausgerichtet wird und bleibt, während die Flaschen (B) entlang ihrer durch die Transportmittel (100) definierten, geradlinigen Flaschenvorschubbahn (100y) weiterbewegt werden,
- unter Beibehaltung des formschlüssigen Erfassens werden die geöffneten Manschetten mit dem Ziel vorwärts bewegt, diese auf den Hals der jeweils vertikal darunter stehenden Flasche aufzusetzen.

5. Vorrichtung nach einem der Ansprüche 1 bis 4, **dadurch gekennzeichnet, dass** die zweite Bahn (500a - 500b - 500c - 500d) zum Ergreifen, Öffnen, Aufsetzen und Freigeben ein drittes Segment (500c - 500d) aufweisen, an dem die formschlüssig erfassten und auf den Hals der Flaschen (B) aufgesetzten Manschetten (M) freigegeben werden.

6. Vorrichtung nach einem der vorhergehenden Ansprüche, **dadurch gekennzeichnet, dass** die Greif-, Transport- und Aufsetzmittel (500) eine Mehrzahl von Greifeinheiten (510) haben, die sich auf einer geschlossenen Umlaufbahn bewegen, wobei jede Greifeinheit (510) eine zugeordnete Greifzange (510a) mit zwei Greifbacken (512a, 513a) hat und eine geschlossene Stellung einnimmt, in der die zwei Greifbacken einen vorbestimmten Abstand (L-510) voneinander haben, der dem Maß (L-M) der Manschette (M) entspricht, um die korrekte und vollständige Öffnung der Manschette zu definieren.

7. Vorrichtung nach Anspruch 6, **dadurch gekennzeichnet, dass** die Greif-, Transport-und Aufsetzmittel (500) eine Mehrzahl von Greifeinheiten (510) haben, die sich auf einer geschlossenen Umlaufbahn bewegen, dass diese Umlaufbahn ein erstes Segment (500a - 500b) hat, entlang dem die Greifzangen (510) nacheinander die teilweise geöffneten und von den Greif-, Überführungs- und Vorschubmitteln (300) zugeführten Manschetten erfassen.

8. Vorrichtung nach Anspruch 7, **dadurch gekennzeichnet, dass** die Greif-, Transport- und Aufsetzmittel (500) eine Mehrzahl von Greifeinheiten (510) haben, die sich auf einer geschlossenen Umlaufbahn bewegen, dass diese Umlaufbahn ein zweites Segment (500b - 500c) hat, entlang dem sich die Greifzangen (510) von hinten nach vom bewegen und dabei die geöffneten Manschetten (M) formschlüssig und jede relativ zu der darunter stehenden Flasche (B) vertikal halten, und dass die auf dem zweiten Segment (500b - 500c) vorwärts bewegen Greifeinheiten nacheinander die folgenden Operationen ausführen:
a) die vorwärts bewegten Greifeinheiten (510) setzen die Manschetten formschlüssig auf den Hals der Flaschen (B),
b) die Greifbacken der Greifeinheiten (510) öffnen sich, um die aufgesetzten Manschetten (M) freizugeben,
c) die Greifeinheiten (510) werden bis zu einer Höhe angehoben, in der sie nicht mit den vorwärts bewegten Flaschen (B) in Berührung kommen.

9. Vorrichtung nach einem der vorhergehenden Ansprüche, **dadurch gekennzeichnet, dass** diese umfasst:
- einen ersten Servomotor (M100), der mit einer Steuereinheit verbunden und von der er für den Antrieb der Transportmittel (100) gesteuert wird,
- einen zweiten Servomotor (M200), der mit einer Steuereinheit verbunden und von dieser für den Antrieb der Magaziniermittel (200) gesteuert wird,
- einen dritten Servomotor (M300), der mit einer Steuereinheit verbunden und von dieser für den Antrieb der Greif-, Transport- und Aufsetzmittel (500) gesteuert wird.

## Revendications

1. Dispositif pour insérer des manchons (M) sur le col d'une bouteille (B), comprenant des moyens de transport des bouteilles (100) s'étendant de façon rectiligne et aptes à transporter les bouteilles (B) sur une voie d'alimentation continue rectiligne (100y) de bouteilles l'une derrière l'autre d'avant en arrière, les bouteilles se présentant debout le col en haut, **caractérisé par**
- des moyens (200) de magasinage des manchons avec une zone de prise (201) des manchons, lesdits moyens de magasinage (200) contenant les manchons (M) empilés sous forme applatie et les avançant sous cette forme plate vers la zone de prise (201),
- des moyens de prise, de translation et d'alimentation (300) aptes à saisir les manchons (M) dans la zone de prise (201) des moyens de magasinage (200) et à transporter vers l'avant les manchons (M) individuellement sur une première voie de saisie, de dépliage et d'alimentation (300a - 300b), lesdits moyens de prise, de translation et d'alimentation (300) étant aptes à faire avancer les manchons (M) partiellement ouverts vers des moyens suivants de prise, de transport et d'insertion (500),
- des moyens de dépliage (400) aptes à ouvrir partiellement les manchons (M) pendant leur transport sur la première voie de saisie, de dépliage et d'alimentation (300a - 300b),
- des moyens de saisie, de transport et d'insertion (500) aptes à saisir l'un après l'autre les manchons partiellement ouverts (M) présentés par les moyens de prise, de translation et d'alimentation (300) et à les transporter l'un après l'autre sur une seconde voie (500a - 500b - 500c - 500d) pour les saisir, les ouvrir, les insérer et les libérer, les manchons (M) étant, sur ladite seconde voie, insérés sur le col des bouteilles correspondantes (B) pendant leur transport sur la voie d'alimentation continue rectiligne (100y).

2. Dispositif selon la revendication 1 **caractérisé par le fait que** la première voie de saisie, de dépliage et d'alimentation (300a - 300b) pour les manchons se présente sous forme d'un segment de cercle, que les moyens de dépliage (400) sont positionnés radialement à côté de la voie de saisie, de dépliage et d'alimentation (300a - 300b) sous forme de segment de cercle et que les moyens de dépliage (400) agissent sur les manchons (M) pendant leur transport le long de la première voie de saisie, de dépliage et d'alimentation (300a - 300b).

3. Dispositif selon la revendication 1 ou 2 **caractérisé par le fait que** la seconde voie (500a - 500b - 500c - 500d) pour saisir, ouvrir, insérer et libérer les manchons (M) présente un premier segment (500a - 500b) sur lequel on effectue les opérations suivantes :
- les manchons (M) partiellement ouverts et amenés l'un après l'autre par les moyens de prise, de translation et d'alimentation (300) sont saisis individuellement,
- les manchons sont complètement et correctement ouverts pendant leur saisie.

4. Dispositif selon une des revendications précédentes **caractérisé par le fait que** la seconde voie (500a - 500b - 500c - 500d) pour saisir, ouvrir, insérer et libérer les manchons (M) présente un second segment (500b - 500c) sur lequel on effectue les opérations suivantes :
- les manchons ouverts et saisis sont avancés, chaque manchon (M) étant alignés au-dessus de la bouteille (B) qui passe debout au-dessous pendant son transport sur la voie d'alimentation continue rectiligne (100y) définie par les moyens de transport (100),
- tout en conservant la saisie, les manchons ouverts sont transportés en avant et insérés sur le col de la bouteille située au-dessous.

5. Dispositif selon une des revendications précédentes **caractérisé par le fait que** la seconde voie (500a - 500b - 500c - 500d) pour saisir, ouvrir, insérer et libérer les manchons (M) présente un troisième segment (500c - 500d) sur lequel on libère les manchons (M) saisis et insérés sur le col des bouteilles (B).

6. Dispositif selon une des revendications précédentes **caractérisé par le fait que** les moyens de saisie, de transport et d'insertion (500) présentent plusieurs unités de saisie (510) qui se meuvent sur une voie orbitale sans fin, chaque unité de saisie (510) étant munie d'une pince (510a) à deux mâchoires (512a, 513a) qui, en position fermée, sont éloignées l'une de l'autre d'une certaine distance (L-510) correspondant à la taille (L-M) du manchon pour en définir l'ouverture totale correcte.

7. Dispositif selon la revendication 6 **caractérisé par le fait que** les moyens de saisie, de transport et d'insertion (500) présentent plusieurs unités de saisie (510) qui se meuvent sur une voie orbitale sans fin , cette voie présentant un premier segment (500a - 500b) le long duquel les pinces (510) saisissent les manchons partiellement ouverts et amenés par les moyens de prise, de translation et d'alimentation (300).

8. Dispositif selon la revendication 7 **caractérisé par le fait que** les moyens de saisie, de transport et d'insertion (500) présentent plusieurs unités de saisie (510) qui se meuvent sur une voie orbitale sans fin , cette voie présentant un second segment (500b
- 500c) le long duquel les pinces (510) se meuvent d'arrière en avant en saisissant les manchons ouverts (M) et les maintiennent verticalement au-dessus de la bouteille (B) et que sur le segment (500b - 500c) les unités de saisie effectuent les opérations suivantes :
- les unités de saisie (510) avancées insèrent les manchons sur le col des bouteilles (B),
- les mâchoires des unités de saisie (510) s'ouvrent pour libérer les manchons insérés (M),
- les unités de saisie (510) sont élevées à une hauteur qui permette le passage des bouteilles (B).

9. Dispositif selon une des revendications précédentes **caractérisé par le fait qu'**il comprend :
- un premier servo-moteur (M100) relié à une unité de commande pour l'avancement des moyens de transport (100),
- un second servo-moteur (M200) relié à une unité de commande pour l'entraînement des moyens de magasinage (200),
- un troisième servo-moteur (M200) relié à une unité de commande pour l'entraînement des moyens de saisie, de transport et d'insertion (500).
